# EUROPÄISCHE PATENTSCHRIFT

(11) **EP 2 037 134 B1**
(45) Veröffentlichungstag und Bekanntmachung des Hinweises auf die Patenterteilung: **27.01.2010**
(21) Anmeldenummer: 07116106.1
(22) Anmeldetag: 11.09.2007
(51) Int. Cl.: F16C 19/18, B60B 27/00, C22C 37/04

(54) **Lageranordnung für Kraftfahrzeuge**
Bearing arrangement for motor vehicles
Arrangement de palier pour véhicules automobiles

(43) Veröffentlichungstag der Anmeldung: 18.03.2009
(73) Patentinhaber: Georg Fischer GmbH & Co. KG, 40822 Mettmann (DE)
(72) Erfinder: Rieck, Torsten, 40878, Ratingen (DE); Hecker, Andreas, 78267, Aach (DE); Güll, Andreas, 47167, Duisburg (DE); Menk, Werner, 8200, Schaffhausen (CH); Mahnig, Dominik, 8200, Schaffhausen (CH)
(74) Vertreter: Weiss, Wolfgang

(56) Entgegenhaltungen:
- EP-A- 0 904 956
- DE-A1- 10 323 911
- DE-A1-102004 056 331

## Beschreibung

Die Erfindung bezieht sich auf eine Lageranordnung für Kraftfahrzeuge umfassend eine Lageraussenlaufbahn, Wälzkörper und eine Lagerinnenlaufbahn.

Im Kraftfahrzeugbau werden Lageranordnungen verwendet für rotierende Bauteile im Verbrennungsmotor und für Fahrwerksteile, sowohl für angetriebene wie auch nicht angetriebene Räder. Die wichtigsten Bauarten sind Gleitlager und Wälzlager. Bauteile, wie Kurbelwellen und Ausgleichswellen am Motor werden heute über Gleitlager gelagert. Die wichtigsten Wälzlager sind mit Wälzkörper, wie Kugeln, Tonnen oder Nadeln zwischen einer inneren und einer äusseren Wälzlagerlaufbahnfläche ausgelegt. Der Lagerinnenring und der Lageraussenring sind aus gehärtetem Stahl ausgelegt. Gleitlager haben einen höheren Reibverlust und führen somit zu einem höheren Kraftstoffverbrauch. Die rotierenden Bauteile am Motor und die Fahrwerksteile sind üblicherweise als Gussteile hergestellt. Der Zusammenbau von Wälzkörpern, Lagerringen und Gussbauteilen aus Einzelteilen aus den Werkstoffen Stahl und Gusseisen, die unterschiedliche mechanische und physikalische Eigenschaften haben, ist zeit- und kostenaufwändig.

Aus der DE 103 23 911 A1 ist eine gattungsgemässe Lageranordnung bekannt, wobei Wälzkörper, Lagerinnenringe und Lageraussenringe aus einem Stahl hergestellt werden, der viel fester ist als das herkömmliche Gusseisen. Es wird deshalb vorgeschlagen, die Achsschenkel zusammen mit dem Lageraussenring in einem Stück aus Stahl herzustellen. Stahllegierungen weisen im Gegensatz zu Gusseisen mit Kugelgraphit keine Sphärolithen auf. Eine Stahloberfläche ohne Sphärolithen hat wesentlich schlechtere Notlaufeigenschaften. Eine Oberfläche mit Sphärolithen weist kugelförmige Taschen auf, die als Depot für Schmieröl dienen können.

Ausgehend von diesem Stand der Technik ist es Aufgabe der Erfindung, eine Lageranordnung für Kraftfahrzeuge anzugeben, die möglichst kostengünstig und aus möglichst wenigen Einzelteilen, die tribologisch möglichst kompatibel sind, aufgebaut ist.

Diese Aufgabe wird gelöst durch eine Lageranordnung für Kraftfahrzeuge umfassend eine Lageraussenlaufbahn, einen Wälzkörper und eine Lagerinnenlaufbahn, wobei die Lageraussenlaufbahn und/oder die Lagerinnenlaufbahn aus einer Gusseisenlegierung mit Kugelgraphit ausgebildet sind und wobei die Laufbahnflächten kugelförmige Taschen als Depot für Schmieröl aufweisen.

Bevorzugte Weiterbildungen der Erfindung ergeben sich aus den abhängigen Ansprüchen.

Es ist von Vorteil, dass mit der vorgeschlagenen Lageranordnung im Kraftfahrzeug der Kraftstoffverbrauch und die Umweltbelastung durch Abgase reduziert werden kann. Dies wird dadurch erreicht, dass die Gusseisenlegierung mit Kugelgraphit an der Laufbahnfläche kugelförmige Taschen aufweist. Dadurch werden die Trockenlaufeigenschaften verbessert und die Reibungsverluste der Lageranordnung reduziert. Eine weitere Reduzierung des Kraftstoffverbrauches wird dadurch erreicht, dass die Lageraussenlaufbahn, die Wälzkörper und die Lagerinnenlaufbahn an rotierenden Wellen im Motor ausgebildet sind. Mit der hier vorgeschlagenen Lageranordnung für Kraftfahrzeuge können bei den rotierenden Wellen im Motor die Gleitlager durch Wälzlager ersetzt werden.

Es ist auch von Vorteil, dass mit der neuen Lageranordnung Herstellkosten eingespart werden können. Dies wird dadurch erreicht, dass die Laufbahnflächen direkt aus Gusseisen mit Kugelgraphit ausgebildet werden. Der aufwändige Einbau von Lagerschalen entfällt. Die Anzahl der Bauteile bei Schwenklagern, Radträgern und Radnaben kann wesentlich reduziert werden.

Als Gusseisenlegierung mit Kugelgraphit wird SiboDur, eine Legierung mit Silizium und Bor verwendet, wobei die Oberflächenhärte, gemessen zwischen den kugelförmigen Taschen, gleichwertig oder grösser als die Oberflächenhärte von gehärtetem Stahl ist.

Ein Ausführungsbeispiel der Erfindung wird anhand der Figuren beschrieben. Es zeigen:
Figur 1 einen Schnitt auf eine erfindungsgemässe Lageranordnung für Kraftfahrzeuge und
Figur 2 einen Schnitt durch eine weitere Lageranordnung für Kraftfahrzeuge.

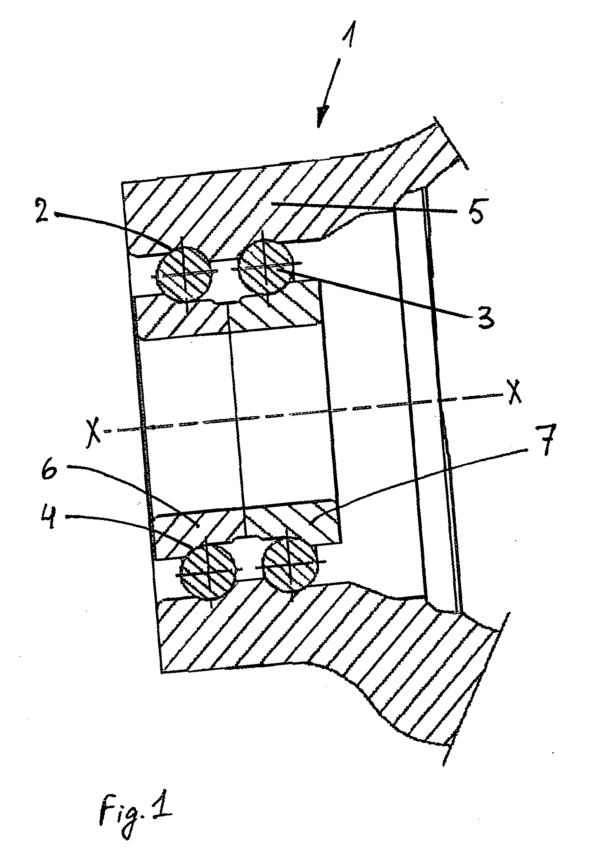

In Figur 1 ist ein Radlager 1 für Kraftfahrzeuge geschnitten entlang der Radachse X dargestellt. Die Lageranordnung 1 umfasst radial von Aussen nach Innen gesehen eine Lageraussenlaufbahn 2, mehrere Wälzkörper 3 und eine Lagerinnenlaufbahn 4. Die Lageraussenlaufbahn 2 ist an einem Gussteil 5 aus SiboDur, einer Gusseisenlegierung mit Kugelgraphit Gusseisen mit 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe ausgebildet. Diese im weiteren SiboDur genannte Gusseisenlegierung weist bereichsweise, d.h. zwischen den Sphärolithen gemessen, eine Oberflächenhärte auf, die vergleichbar oder höher ist als die Oberfläche von gehärtetem Stahl. Die Oberflächenhärte nach Vickers von Lagerflächen aus SiboDur, gemessen zwischen den angeschnittenen kugelförmigen Taschen, liegt zwischen 580 und 870 HV, was einer Rockwellhärte von 54 bis 66 HRC entspricht.

Die Kugelgraphitpartikel sind als Sphärolithen überall in der Legierung vorhanden, was dazu führt, dass auch an der Oberfläche des Gussteiles 5 angeschnittene kugelförmige Taschen gebildet sind, die als Depot für das Schmieröl dienen. Die Wälzkörper 3 sind aus herkömmlichem Lagerstahl hergestellt. Als Wälzkörper 3 sind Kugeln 3 dargestellt, es ist jedoch auch denkbar tonnen- oder nadelförmige Wälzkörper 3 zu verwenden. Die Lagerinnenlaufbahn 4 ist aus zwei axial hinter einander angeordneten ringförmigen Lagerinnenringen 6,7 aufgebaut. Die Lagerinnenringe 6,7 können ebenfalls aus der Gusseisenlegierung SiboDur ausgebildet sein.

Durch die Integration der Lageraussenlaufbahn 2 mit dem Gussteil 5 kann der herkömmliche Lageraussenring aus Stahl wegfallen und es werden die Kosten für den Zusammenbau und die Lagerhaltung der einzelnen Teile eingespart. Durch die Herstellung aus einem Guss fallen Probleme an der Grenzfläche zwischen dem Aussenlagerring 2 und dem Gussteil 5 weg. Das Einpressen des Lageraussenringes aus Stahl im Gussteil entfällt. Die Dimensionierung des Gussteiles 5 wird einfacher. Das Gussteil 5 übernimmt die zusätzliche Funktion der Lageraussenlaufbahn 2, weil die Legierung SiboDur an der Oberfläche die gleichen oder besseren Eigenschaften als herkömmlicher Lagerstahl aufweist.

Die Anordnung von Figur 1 kann beispielsweise für Schwenklager, Radträger, Radnaben oder Motorlagerschalen verwendet werden.

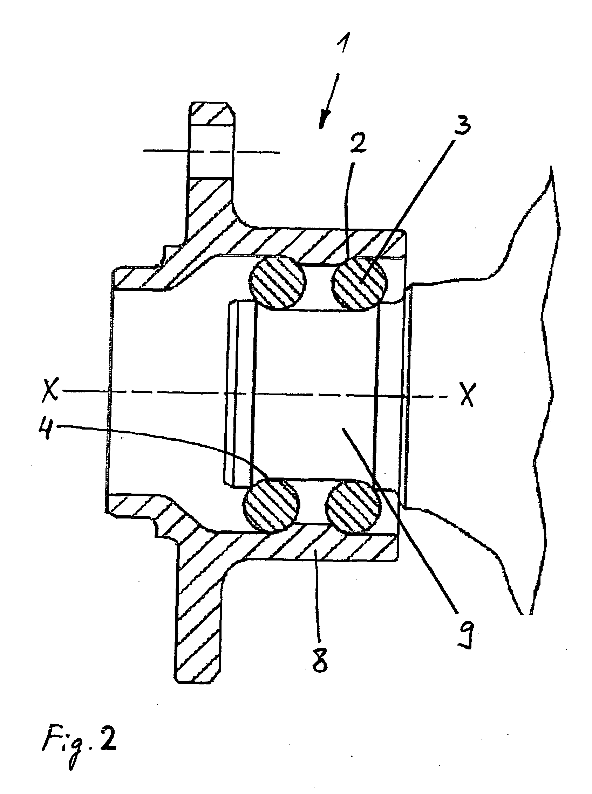

In Figur 2 ist eine weitere Lageranordnung 1 geschnitten dargestellt. Die Anordnung von Figur 2 kann beispielsweise für Radträger mit Radzapfen, Radnaben oder bei angetriebenen Wellen im Motor verwendet werden. Die Lageraussenlaufbahn 2 ist beispielsweise an einem Radträger 8, an dem ein Rad und/oder eine Bremsscheibe befestigt sind, ausgebildet. Der Radträger 8 ist aus der Gusseisenlegierung SiboDur ausgebildet. Die Lagerinnenlaufbahn 4 ist an einem Radzapfen 9, ebenfalls aus der Gusseisenlegierung SiboDur, ausgebildet. Der Radzapfen 9 kann im Bereich der Lagerinnenlaufbahn 4 hohl, d.h. ringförmig oder massiv, d.h. als Wellenstumpf, ausgebildet sein.

Auch im Verbrennungsmotor können weitere rotierende Wellen aus der Gusseisenlegierung SiboDur hergestellt werden. Bauteile, wie beispielsweise Kurbelwelle und Ausgleichswelle, die bisher als Gleitlagersystem mit Lagerschalen hergestellt wurden, können durch Wälzlager, wie in den Figuren 1 und 2 schematisch dargestellt, ersetzt werden. Die Herstellung wird einfacher und die Reibungsverluste werden reduziert, was zu Energieeinsparungen führt.

Mit der hier vorgeschlagenen Verwendung der Gusseisenlegierung SiboDur können Wälzlagerschalen aus Stahl ersetzt werden und können Gleitlager durch Wälzlager ersetzt werden. In Lagerbauteilen aus Sphäroguss können die Lagerschalen, sowohl die Lageraussenlaufbahn 2 als auch die Lagerinnenlaufbahn 4, in den Bauteilen integriert werden.

## Patentansprüche

1. Lageranordnung (1) für Kraftfahrzeuge umfassend eine Lageraussenlaufbahn (2), Wälzkörper (3) und eine Lagerinnenlaufbahn (4), **dadurch gekennzeichnet, dass** die Lageraussenlaufbahn (2) und/oder die Lagerinnenlaufbahn (4) aus einer Gusseisenlegierung mit Kugelgraphit ausgebildet sind, wobei die Laufbahnflächen angeschnittene kugelförmige Taschen als Depot für Schmieröl aufweisen.

2. Lageranordnung (1) für Kraftfahrzeuge nach dem Anspruch 1, **dadurch gekennzeichnet, dass** die Laufbahnflächen, gemessen zwischen den angeschnittenen kugelförmigen Sphärolithentaschen, eine Härte von 580 bis 870 HV aufweisen.

3. Lageranordnung (1) für Kraftfahrzeuge nach mindestens einem der Ansprüche 1 oder 2, **dadurch gekennzeichnet, dass** die Gusseisenlegierung mit Kugelgraphit die Zusammensetzung 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe aufweist.

4. Lageranordnung (1) für Kraftfahrzeuge nach mindestens einem der Ansprüche 1 bis 3, **dadurch gekennzeichnet, dass** die Lagerinnenlaufbahn (4) an einem Lagerinnenring (6,7) aus Gusseisen mit 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe ausgebildet ist.

5. Lageranordnung (1) für Kraftfahrzeuge nach mindestens einem der Ansprüche 1 bis 4, **dadurch gekennzeichnet, dass** die Lagerinnenlaufbahn (4) an einem Radzapfen (9) aus Gusseisen mit 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe ausgebildet ist.

6. Lageranordnung (1) für Kraftfahrzeuge nach mindestens einem der Ansprüche 1 bis 5, **dadurch gekennzeichnet, dass** die Lageraussenlaufbahn (2) an einem Radträger (8) Gusseisen mit 2.5-3.8 Gew.% C, 2.4-3.4 Gew.% Si, 0.02-0.06 Gew.% Mg, 0.002-0.02 Gew.% Al, 0.0002-0.002 Gew.% B, 0.1-1.5 Gew.% Cu und 01.-1.0 Gew.% Mn, Rest Fe ausgebildet ist.

7. Lageranordnung (1) für Kraftfahrzeuge nach mindestens einem der Ansprüche 1 bis 6, **dadurch gekennzeichnet, dass** die Lageraussenlaufbahn (2), die Wälzkörper (3) und die Lagerinnenlaufbahn (4) an rotierenden Wellen im Motor ausgebildet sind.

## Claims

1. Bearing arrangement (I) for motor vehicles, comprising an outer bearing raceway (2), rolling bodies (3) and an inner bearing raceway (4), **characterized in that** the outer bearing raceway (2) and/or the inner bearing raceway (4) are formed from a spheroidal graphite cast-iron alloy, wherein the raceway surfaces have spherical pockets which have been cut away as a deposit for lubricating oil.

2. Bearing arrangement (1) for motor vehicles according to Claim 1, **characterized in that** the hardness of the raceway surfaces, as measured between the spherical spherulite pockets which have been cut away, is between 580 and 870 HV.

3. Bearing arrangement (1) for motor vehicles according to at least one of Claims 1 or 2, **characterized in that** the spheroidal graphite cast-iron alloy has the following composition: 2.5-3.8% by weight C, 2.4-3.4% by weight Si, 0.02-0.06% by weight Mg, 0.002-0.02% by weight Al, 0.0002-0.002% by weight B, 0.1-1.5% by weight Cu and 0.1-1.0% by weight Mn, remainder Fe.

4. Bearing arrangement (1) for motor vehicles according to at least one of Claims 1 to 3, **characterized in that** the inner bearing raceway (4) is formed on an inner bearing ring (6, 7) made from cast iron containing 2.5-3.8% by weight C, 2.4-3.4% by weight Si, 0.02-0.06% by weight Mg, 0.002-0.02% by weight Al, 0.0002-0.002% by weight B, 0.1-1.5% by weight Cu and 0.1-1.0% by weight Mn, remainder Fe.

5. Bearing arrangement (1) for motor vehicles according to at least one of Claims 1 to 4, **characterized in that** the inner bearing raceway (4) is formed on a spindle (9) made from cast iron containing 2.5-3.8% by weight C, 2.4-3.4% by weight Si, 0.02-0.06% by weight Mg, 0.002-0.02% by weight Al, 0.0002-0.002% by weight B, 0.1-1.5% by weight Cu and 0.1-1.0% by weight Mn, remainder Fe.

6. Bearing arrangement (1) for motor vehicles according to at least one of Claims 1 to 5, **characterized in that** the outer bearing raceway (2) is formed on a wheel carrier (8) made from cast iron containing 2.5-3.8% by weight C, 2.4-3.4% by weight Si, 0.02-0.06% by weight Mg, 0.002-0.02% by weight Al, 0.0002-0.002% by weight B, 0.1-1.5% by weight Cu and 0.1-1.0% by weight Mn, remainder Fe.

7. Bearing arrangement (1) for motor vehicles according to at least one of Claims 1 to 6, **characterized in that** the outer bearing raceway (2), the rolling bodies (3) and the inner bearing raceway (4) are formed on rotating shafts in the engine.

## Revendications

1. Arrangement de palier (1) pour véhicules automobiles, comprenant une piste de roulement extérieure (2), des corps de roulement (3) et une piste de roulement intérieure (4), **caractérisé en ce que** la piste de roulement extérieure (2) et/ou la piste de roulement intérieure (4) sont réalisées en fonte alliée à graphite sphéroïdal, dans lequel les surfaces des pistes de roulement présentent des poches sphériques entaillées pour le dépôt d'huile de lubrification.

2. Arrangement de palier (1) pour véhicules automobiles selon la revendication 1, **caractérisé en ce que** les surfaces des pistes de roulement, mesurées entre poches de sphérolithes sphériques entaillées, présentent une dureté de 580 à 870 HV.

3. Arrangement de palier (1) pour véhicules automobiles selon au moins une des revendications 1 ou 2, **caractérisé en ce que** la fonte alliée à graphite sphéroïdal présente la composition suivante: 2,5-3,8 % en poids C, 2,4-3,4 % en poids Si, 0,02-0,06 % en poids Mg, 0,002-0,02 % en poids Al, 0,0002-0,002 % en poids B, 0,1-1,5 % en poids Cu et 0,1-1,0 % en poids Mn, le reste étant du fer.

4. Arrangement de palier (1) pour véhicules automobiles selon au moins une des revendications 1 à 3, **caractérisé en ce que** la piste de roulement intérieure (4) sur une bague de palier intérieure (6, 7) est réalisée en fonte contenant 2,5-3,8 % en poids C, 2,4-3,4 % en poids Si, 0,02-0,06 % en poids Mg, 0,002-0,02 % en poids Al, 0,0002-0,002 % en poids B, 0,1-1,5 % en poids Cu et 0,1-1,0 % en poids Mn, le reste étant du fer.

5. Arrangement de palier (1) pour véhicules automobiles selon au moins une des revendications 1 à 4, **caractérisé en ce que** la piste de roulement intérieure (4) sur un tourillon de roue (9) est réalisée en fonte contenant 2,5-3,8 % en poids C, 2,4-3,4 % en poids Si, 0,02-0,06 % en poids Mg, 0,002-0,02 % en poids Al, 0,0002-0,002 % en poids B, 0,1-1,5 % en poids Cu et 0,1-1,0 % en poids Mn, le reste étant du fer.

6. Arrangement de palier (1) pour véhicules automobiles selon au moins une des revendications 1 à 5, **caractérisé en ce que** la piste de roulement extérieure (2) sur un support de roue (8) est réalisée en fonte contenant 2,5-3,8 % en poids C, 2,4-3,4 % en poids Si, 0,02-0,06 % en poids Mg, 0,002-0,02 % en poids Al, 0,0002-0,002 % en poids B, 0,1-1,5 % en poids Cu et 0,1-1,0 % en poids Mn, le reste étant du fer.

7. Arrangement de palier (1) pour véhicules automobiles selon au moins une des revendications 1 à 6, **caractérisé en ce que** la piste de roulement extérieure (2), les corps de roulement (3) et la piste de roulement intérieure (4) sont formés sur des arbres tournant dans le moteur.
